# NEW EUROPEAN PATENT SPECIFICATION

(11) **EP 0 161 189 B2**
(45) Date of publication and mention of the opposition decision: **28.01.1998**
(45) Mention of the grant of the patent: 03.10.1990
(21) Application number: 85400891.9
(22) Date of filing: 07.05.1985
(51) Int. Cl.: B29C 45/16

(54) **Hot runner mold for three-layer molding**
Heisskanal-Spritzgiesswerkzeug für dreischichtige Formteile
Moule à canaux chauds pour le moulage d'articles à trois couches

(30) Priority: 09.05.1984 JP 67616/84 U
(43) Date of publication of application: 13.11.1985
(73) Proprietor: NISSEI ASB MACHINE CO., LTD., Hanishina-gun Nagano-ken (JP)
(72) Inventor: Nakamura, Yoshinori Nissei Asb Machine Co., Ltd., Hanishina-gun Nagano-ken (JP); Machida, Kazumi Nissei Asb Machine Co., Ltd., Hanishina-gun Nagano-ken (JP)
(74) Representative: Schrimpf, Robert

(56) References cited:
- EP-A- 0 125 787
- DE-A- 2 609 855
- DE-A- 2 716 817
- FR-A- 2 278 479

## Description

### BACKGROUND OF THE INVENTION

### (1) Field of the Invention

This invention relates to a hot runner mold used when a plurality of synthetic resin molded articles such as preforms or containers of which section has a three-layer are obtained by the single operation of injection molding.

### (2) Description of the Prior Art

Where three-layer molded articles are formed, generally a nozzle of double construction comprising an inner nozzle and an outer nozzle is used. This double nozzle is used by being directly placed in nozzle-touch with a gate of the mold. Resins injected from two nozzles into the mold are not mixed with each other, and the resin from the inner nozzle is to form an intermediate layer and the resin from the outer nozzle is to form an inner layer and an outer layer.

Such nozzle is exemplified in the publication FR―A―2 278 479 which discloses (fig. 4) a block 25 interiorly comprising a hole and a nozzle tube 26 inserted into and secured to said hole, said nozzle tube comprising a nozzle member at the end portion thereof and having a diameter, except a base end portion, smaller than that of said hole, a first resin passage 29 being formed between said tube and the wall of the hole and a second resin passage 37 being formed within the nozzle tube up to an opening (5d) provided at said base end portion of the tube, and a nozzle cap 27 screwed into an open edge of said hole to cover said nozzle member projected from the block.

On the other hand, to obtain a plurality of molded articles by the single operation of injection molding, a hot runner mold is used which is provided nozzles brought into nozzle touching with gates of a plurality of cavities of the mold.

This hot runner mold is interiorly provided with a hot runner for connecting the gates with the plurality of nozzles whereby the molten resin from the gates is distributed to each of hot runner nozzles via the hot runner.

When the aforementioned hot runner mold and the double nozzle are used to injection mold a number of three-layer molded articles, since the distance from the gate of the hot runner mold to each hot runner nozzle is long, layers consisting of two different resins obtained by the injection of the resins into the hot runner mold are in the form of a three-layer. Even so, a turbulence occurs in the layers due to the flow resistance or the like before the resins reach the hot runner nozzles. Sometimes the resins become blended thus failing to obtain a three-layer molded article in which inner and outer layers and an intermediate layer are clearly defined.

In view of the foregoing, an attempt has been made in which a plurality of gates and hot runners are provided in a hot runner block and a double runner nozzle is connected to runners equally branched in the number of nozzles whereby different resins are injected and filled in cavities from an inner nozzle and an outer nozzle of the runner nozzle to form a molded article of a three-layer construction.

Since the hot runner mold as described above employs the construction in which a hot runner nozzle doubly preassembled is directly mounted on a hot runner mold, there were problems such that a connection between a plurality of branched runners and hot runners becomes complicated, and that resins are easily stayed in the connection portions and as the number of times of molding increases, the resins are excessively heated due to their staying thus giving rise to phenomena such as cracking or carbonization.

### SUMMARY OF THE INVENTION

This invention has been accomplished in order to solve the problems noted above with respect to prior art. It is an object of the present invention to provide a hot runner mold of a new construction in which even if a hot runner mold is used to obtain a number of articles, a three-layer molded article comprising an inner layer, an outer layer and an intermediate layer may be positively molded.

It is a further object of the present invention to provide a hot runner mold of a new construction in which a hot runner nozzle of a double construction can be easily assembled and disassembled, a nozzle and a hot runner can be simply connected without having the resin stayed, and a nozzle can be very easily disassembled for the cleaning of the interior of a hot runner block.

It is another object of the present invention to provide a hot runner mold of a new construction in which the manufacturing cost of the mold is low, the resin smoothly flows, and the resin from a gate of a hot runner block to a doubly assembled hot runner nozzle can be distributed smoothly.

To achieve the aforementioned objects, the present invention provides a hot runner mold as defined in claim 1.

In the hot runner mold as described above, different resins can be injected into two runners bored in the hot runner block, and these two resins may be guided into a first resin passage in the periphery of the nozzle tube in communication with each runner and a second resin passage within the nozzle tube. In a nozzle portion of a double construction comprising an end and a nozzle member, molten resins from two resin passage may be injected into cavities, and therefore, even if the distance from the gates of both the runners to the cavities is long, blending of the resins does not occur halfway and a number of three-layer molded articles may be obtained by the single operation of molding.

The present invention will now be described specifically by way of one embodiment shown in the accompanying drawings.

### BRIEF DESCRIPTION OF THE DRAWINGS

One embodiment of a hot runner mold for three-layer molding in accordance with this invention is shown in the accompanying drawings in which:
Fig. 1 is a longitudinal sectional front view of a half portion of an injection mold indicated as the chain line;
Fig. 2 is a side view of the same; and
Fig. 3 is a sectional view of a part of the injection mold and end portions of nozzles showing the molding state of a three-layer molded article.

### DETAILED DESCRIPTION OF THE INVENTION

In the figures, a hot runner block indicated as 1 is interiorly bored with two hot runners 2 and 3 which are located parallel to each other above and below in a longitudinal direction. Central portions of the hot runners 2 and 3 are connected to passages at right angles respectively connected to gates 2a and 3a provided on the side portion of the hot runner block 1.

Holes 4 for forming resin passages are equidistantly bored in four places of the hot runner block 1 from the upper surface of a portion near the bottom of the hot runner block 1 so as to cross with the hot runners 2 and 3.

A nozzle tube 5 having a nozzle member 5a connected to an end thereof is detachably fitted in each of the holes 4 and 4. This nozzle tube 5 comprises a tube portion 5b formed to have a smaller diameter than that of the hole 4 and a base end portion 5c formed to have the same diameter as that of the hole 4, said base end portion 5c having an opening 5d relative to the hot runner 3.

The nozzle tube 5 is forced, from above of the hot runner block 1, to a position where the opening 5d and the hot runner 3 register with the base end portion 5c being placed in contact with the bottom surface of the hole, whereby a first resin passage A in communication with the hot runner 2 is formed between the tube portion 5b and a hole wall, and a second resin passage B in communication with the hot runner 3 is formed within the nozzle tube 5. The nozzle member 5a at the end of the nozzle tube 5 is positioned to be projected on the upper surface of the hot runner block 1.

A reference numeral 6 denotes a nozzle cap and a nozzle mouth 6a is provided at the end of a cylindrical member having the same internal diameter as that of the hole 4. This nozzle cap 6 is screwed into open end of each of the holes 4, 4 to thereby cover the end portion of the nozzle tube 5 and to provide a communication between the first resin passage a and the nozzle mouth 6a, thus constituting a double hot runner nozzle where the nozzle member 5a at the end of the nozzle tube which forms a nozzle of the second resin passage B is positioned within the nozzle mouth.

Thus, the above-described hot runner mold is to have four nozzles of a double construction projected from the hot runner block 1. Each of these nozzles is brought into nozzle touch with each cavity gate of an injection mold 7 to obtain a number of three-layer molded articles.

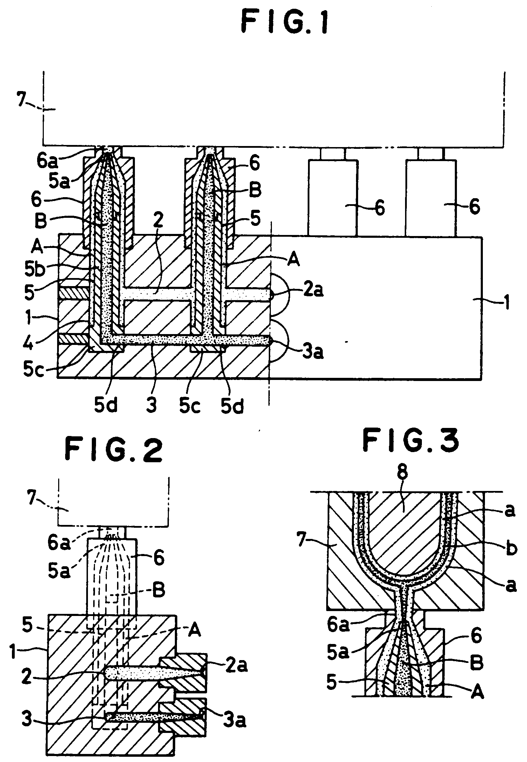

Fig. 3 shows the molding state. Two different resins poured into the hot runners 2, 3 from the gates 2a, 3b of the hot runner block 1 pass through the first and second resin passages A and B and reach the end 5a and the end of the nozzle cap 6, and then first meet together at the nozzle mouth 6a. Then, in the state where molten resin from the second resin passage B is surrounded by molten resin from the first resin passage A, the resin is poured into the cavity of the mold 7 whereby a three-layer molded article 9 wherein the resin from the second resin passage B is present as an intermediate layer *b* between inner and outer layers *a* formed by the resin from the first resin passage A can be formed in the periphery of a core 8.

In this case, the intermediate layer *b* can be one-sided toward outside or inside by imparting a temperature difference to the injection mold 7 or the core 8.

As described above, in the hot runner mold according to the present invention, the nozzle tube 5 is fitted into the hole 4 bored in the hot runner block 1, and the nozzle member 5a projected from the hot runner block of the nozzle tube 5 is covered by the nozzle cap 6 to form the first and second resin passages A and B in communication with two hot runners 2 and 3 present in the hot runner block 1 and to constitute a hot nozzle of a double construction, and therefore, it is possible to very easily perform assembling and disassembling of the double nozzle and cleaning of the resin passages merely by installing and removing the nozzle tube 5 and the nozzle cap 6. In addition, the present invention has the advantages in that since the number of parts is less, the present mold can be manufactured at less cost and a special technique is not required in assembling the nozzle.

## Claims

1. A hot runner mold for three-layer molding used for the injection molding of a synthetic resin molded article having a three-layer construction comprising:
a block (1) interiorly comprising a hole (4) having an open end, a nozzle tube (5) comprising a nozzle member (5a) at one end portion thereof, an intermediate tube portion (5b) having an outer diameter smaller than that of said hole, and a base end portion (5c) opposite the one end portion, the tube (5) having an opening (5d) at the base end portion (5c), said tube (5) being forced within said hole (4) to a position but removable, said nozzle member (5a) projecting from said block (1) when said tube is forced to said position,
a first resin passage (A) formed between the wall of the hole (4) and the intermediate tube portion (5b) when said nozzle tube (5) is inserted into and secured to said hole (4), a second resin passage (B) within the nozzle tube (5) leading from the said opening (5d) at the base end portion (5c) to the said nozzle member (5a) and a nozzle cap (6) having a nozzle mouth (6a), said nozzle cap being screwed into said open end of said hole (4) to provide a communication between the first resin passage (A) and said nozzle mouth (6a) and to cover said nozzle member projecting from the block to form a nozzle having a double construction in nozzle touch with a cavity gate of the mold,
characterized in that said hole (4) has a bottom end opposite the said open end, in that the said base end portion (5c) of the tube (5) is fitting into said hole (4) at the said bottom end when said tube (5) is forced to said position, in that said nozzle member (5a) is positioned within the nozzle mouth (6a) when said tube (5) is forced to said position, in that said block is a hot runner block (1) interiorly comprising two parallel hot runners (2, 3) and a plurality of said holes (4) at right angles with and crossing each of the hot runners (2, 3), said hot runner block (1) being provided at the side thereof with gates (2a, 3a) connected to each of the hot runners, in that the said opening (5d) at the base end portion (5c) of each tube and one of said hot runners (3) register when said tube is forced to said position, and said first passage (A) of each hole (4) is connected to the other hot runner (2).

2. The hot runner mold according to Claim 1, wherein said nozzle tube (5) is detachably fixed with the base end portion (5c) forced into a peripheral wall of a bottom of the hole (4).

3. The hot runner mold according to Claim 1, wherein said nozzle tube (5) is detachably fixed with the base end portion (5c) screwed into the peripheral wall of the bottom of the hole (4).

## Patentansprüche

1. Heißgießform für dreischichtiges Formen beim Spritzgießen eines Kunstharz-Spritzformlings von dreischichtigem Aufbau mit
einem Block (1), enthaltend in seinem Inneren ein Loch (4) mit einem offenen Ende, ein Düsenrohr (5) mit einem Düsenstück (5a) an seinem einem Endabschnitt, einen Zwischenrohrabschnitt (5b), der einen kleineren Aussendurchmesser als das Loch aufweist, und einen Basisendabschnitt (5c) entgegengesetzt dem einen Endabschnitt, wobei das Düsenrohr (5) eine Öffnung (5d) am Basisendabschnitt (5c) aufweist, das besagte Düsenrohr (5) in das Loch (4) in eine Position eingedrückt ist, aus der es jedoch entfernbar ist, und das Düsenstück (5a) in der besagten eingedrückten Position aus dem Block (1) vorragt,
einem ersten Harzkanal (A), der zwischen einer Wand des Lochs (4) und dem Zwischenrohrabschnitt (5b) ausgebildet ist, wenn das Düsenrohr (5) in das Loch (4) eingeschoben und darin gesichert ist, einem zweiten Harzkanal (B) in dem Düsenrohr, der von der besagten Öffnung (5d) am Basisendabschnitt (5c) bis zu dem Düsenstück (5a) reicht, und einer Düsenkappe (6) mit einem Düsenmund (6a), welche in das besagte offene Ende des Loches (4) eingeschraubt ist, um eine Verbindung zwischen dem ersten Harzkanal (A) und dem Düsenmund (6a) herzustellen und das vom Block vorragende Düsenstück abzudecken, um eine Düse in Doppelanordnung in Düsenkontakt mit einer Hohlraummündung der Form zu bilden,
dadurch **gekennzeichnet**, daß das Loch (4) ein Bodenende entgegengesetzt dem offenen Ende hat, daß der Basisendabschnitt (5c) des Düsenrohrs (5) in das Loch (4) am Bodenende paßt, wenn das Düsenrohr (5) in die besagte Position eingedrückt ist, daß das Düsenstück (5a) im Düsenmund (6a) positioniert ist, wenn das Düsenrohr (5) in die besagte Position eingedrückt ist, daß der Block ein Heißgießblock (1) ist, der in seinem Inneren zwei parallele Heiß-Angießkanäle (2, 3) und mehrere besagte, die Heiß-Angießkanäle unter einem rechten Winkel kreuzende Löcher (4) aufweist, wobei der Heißgießblock an seiner Seite je eine Mündung (2a, 3a) aufweist, die mit je einem Heiß-Angießkanal verbunden sind, daß die besagte Öffnung (5d) am Basisendabschnitt (5c) jedes Düsenrohres und einer der beiden Heiß-Angießkanäle (3) miteinander fluchten, wenn das Düsenrohr in die besagte Position gebracht ist, und daß der erste Harzkanal (A) jedes Loches mit dem anderen Heiß-Angießkanal (2) verbunden ist.

2. Heißgießform nach Anspruch 1, bei der das Düsenrohr (5) mit seinem Basisendabschnitt (5c) durch Eindrücken in eine Umfangswand des Lochfußes des Loches (4) lösbar befestigt ist.

3. Heißgießform nach Anspruch 1, bei der das Düsenrohr (5) mit seinem Basisendabschnitt (5c) durch Einschrauben in die Umfangswand des Lochfußes des Loches (4) lösbar befestigt ist.

## Revendications

1. Un moule à canaux chauds pour le moulage à trois couches, utilisé pour le moulage par injection d'un article moulé en résine synthétique ayant une construction à trois couches comprenant:
un bloc (1) comprenant en son intérieur un trou (4) ayant une extrémité ouverte, un tube de buse (5) comprenant un élément de buse (5a) à une partie d'extrémité du tube, une partie de tube intermédiaire (5b) ayant un diamètre externe plus petit que celui dudit trou, et une partie d'extrémité de base (5c) à l'opposé de ladite une partie d'extrémité du tube, le tube (5) présentant une ouverture (5d) à la partie d'extrémité de base (5c), ledit tube (5) étant placé à force en une position à l'intérieur dudit trou (4) mais pouvant être retiré, ledit élément de buse (5a) dépassant dudit bloc (1) lorsque ledit tube est placé à force dans ladite position,
un premier passage pour résine (A) formé entre la paroi du trou (4) et la partie de tube intermédiaire (5b) lorsque ledit tube de buse (5) est inséré et fixé audit trou (4), un second passage pour résine (B) à l'intérieur du tube de buse (5) menant de ladite ouverture (5d) à la partie d'extrémité de base (5c) jusqu'audit élément de buse (5a) et un couvercle de buse (6) ayant une embouchure de buse (6a), ledit couvercle de buse étant vissé sur ladite extrémité ouverte dudit trou (4) pour établir une communication entre le premier passage pour résine A et ladite embouchure de buse (6a) et pour couvrir ledit élément de buse qui dépasse du bloc pour former une buse ayant une construction double en contact de buse avec une entrée de cavité du moule, caractérisé en ce que ledit trou (4) a une extrémité de fond à l'opposé de ladite extrémité ouverte, en ce que ladite partie d'extrémité de base (5c) du tube (5) est ajustée dans ledit trou (4) au niveau de ladite extrémité de fond lorsque ledit tube (5) est placé à force dans ladite position, en ce que ledit élément de buse (5a) est positionné à l'intérieur de l'embouchure de buse (6a) lorsque ledit tube (5) est placé à force dans ladite position, en ce que ledit bloc est un bloc à canaux chauds (1) comprenant en son intérieur deux canaux chauds parallèles (2, 3) et une pluralité desdits trous (4) à angle droit et traversant chacun des canaux chauds (2, 3), ledit bloc à canaux chauds (1) étant muni sur son côté d'entrées (2a, 3a) reliées à chacun des canaux chauds, en ce que ladite ouverture (5d) à
la partie d'extrémité de base (5c) de chaque tube et l'un desdits canaux chauds coïncident lorsque ledit tube est placé à force dans ladite position, et en ce que ledit premier passage (A) de chaque trou (4) est connecté à l'autre canal chaud (2).

2. Le moule à canaux chauds selon la revendication 1, dans lequel ledit tube de buse (5) est fixé de façon détachable avec la partie d'extrémité de base (5c) placée à force dans une paroi périphérique d'un fond du trou (4).

3. Le moule à canaux chauds selon la revendication 1, dans lequel ledit tube de buse (5) est fixé de façon détachable avec la partie d'extrémité de base (5c) vissée dans la paroi périphérique du fond du trou (4).
